# EUROPEAN PATENT SPECIFICATION

(11) **EP 2 075 501 B1**
(45) Date of publication and mention of the grant of the patent: **02.05.2012**
(21) Application number: 08021932.2
(22) Date of filing: 17.12.2008
(51) Int. Cl.: F21S 8/12, F21V 7/00, B60Q 1/00, F21W 101/10, F21Y 113/00

(54) **Vehicle headlamp**
Fahrzeugscheinwerfer
Phare de véhicule

(30) Priority: 27.12.2007 JP 2007337582
(43) Date of publication of application: 01.07.2009
(73) Proprietor: Koito Manufacturing Co., Ltd., Tokyo 108-8711 (JP)
(72) Inventor: Tsukamoto, Michio, Shizuoka-shi Shizuoka (JP); Naganawa, Masahito, Shizuoka-shi Shizuoka (JP)
(74) Representative: Grünecker, Kinkeldey, Stockmair & Schwanhäusser

(56) References cited:
- DE-A1-102007 016 294
- DE-C1- 4 229 728
- US-A1- 2006 239 022

## Description

### FIELD OF THE INVENTION

Apparatuses and devices consistent with the present invention relate to a vehicle headlamp which can form a light distribution pattern for daytime running, as known by the preamble of DE 4229728 C1.

### BACKGROUND ART

In recent years, a vehicle lamp called a daytime running lamp has been developed. Daytime running lamps are turned on during the daytime to make oncoming drivers and pedestrians recognize the existence of the vehicle by outwardly irradiating light from a light source. This type of vehicle lamp is, for example, embedded in a front bumper of an automobile. Like the other types of indicating lamps such as a clearance lamp, a daytime running lamp includes a light emitting diode (LED) which is provided as a light source and a reflector which is arranged behind the LED to forwardly reflect light emitted from the LED, and the LED and the reflector are accommodated inside a lamp chamber defined by a lamp body and a front cover.

JP2006-164909A, for example, describes a multifunctional daytime running lamp which has a good external appearance even when it is not lit. This daytime running lamp has a first LED and a second LED inside a lamp chamber defined by a lamp body and a front cover. Light from the first LED is reflected by a reflector area to form a first light distribution pattern having a high intensity, while light from the second LED is surface-emitted from the entire light guiding area to form a second light distribution pattern. By combining these light distribution patterns, unique light distribution patterns are created..

This daytime running lamp is mounted in an opening formed in a front wall of a front bumper from a front side of the bumper such that the front cover of the lamp becomes substantially flush with the front wall of the bumper.

However, because the daytime running lamp is embedded in the front bumper and is separately provided at a position spaced apart from a headlamp, a mounting space for the daytime running lamp is required in addition to a mounting space for the headlamp. This additional mounting space requirement has been disadvantageous not only in that the total space required is large, but also in that a mounting member, a mounting design and a mounting work for the daytime running lamp is necessary in addition to those for the headlamp, resulting in increase of manufacturing cost.

### SUMMARY OF THE INVENTION

It is an object of the present invention to provide a low-cost vehicle headlamp which can form a headlamp light distribution pattern and a daytime running light distribution pattern while reducing a mounting space on a vehicle.

According to an aspect of the present invention, a vehicle headlamp includes a headlamp light source disposed on an optical axis extending in a front-and-rear direction of a vehicle, a headlamp reflector which forwardly reflects light from the headlamp light source, a daytime running lamp light source disposed to a rear side of the headlamp reflector, a first daytime running lamp reflector which forwardly reflects light from the daytime running lamp light source, and a second daytime running lamp reflector which reflects the light from the first daytime running lamp reflector toward the headlamp reflector. The light from the daytime running lamp light source is reflected by the first and second daytime running lamp reflectors and the headlamp reflector to form a daytime running light distribution pattern.

Other aspects and advantages of the invention will be apparent from the following description, the drawings and the claims.

### BRIEF DESCRIPTION OF THE DRAWINGS

Fig. 1 is a front view of a vehicle headlamp according to a first embodiment of the present invention;

Fig. 2 is a sectional view taken along the line II-II in Fig. 1; and

Fig. 3 is a sectional view of a vehicle headlamp according to a second embodiment of the present invention.

### DETAILED DESCRIPTION

Hereinafter, embodiments of the present invention will be described in detail with reference to the drawings.

FIRST EMBODIMENT

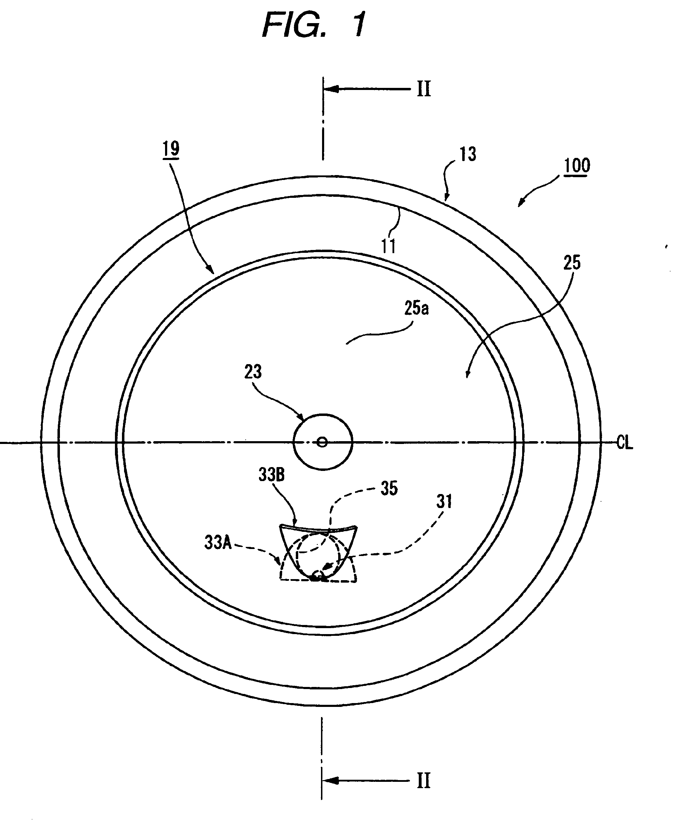

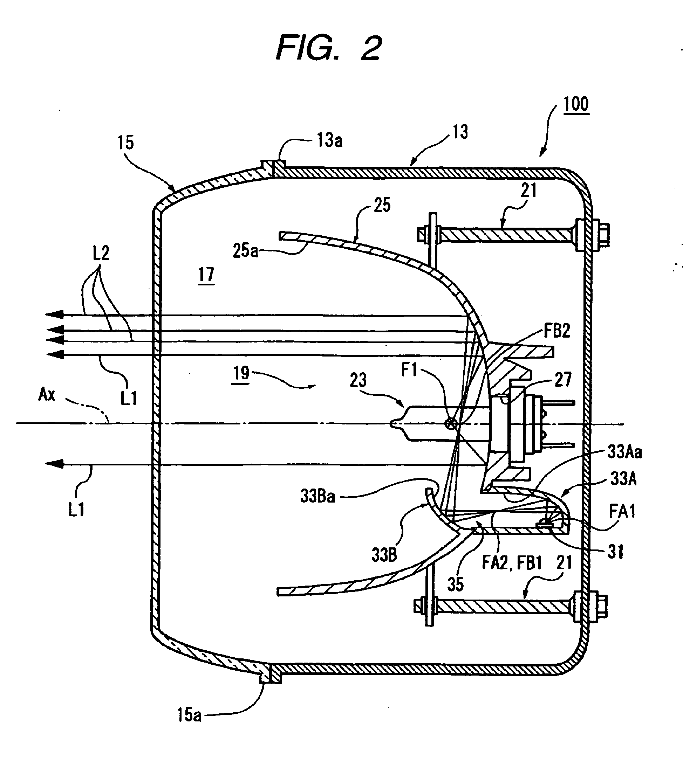

As shown in Figs. 1 and 2, a vehicle headlamp 100 according to a first embodiment includes a lamp body 13 having a front opening 11 and a transparent front cover 15 which is attached to the lamp body 13 to cover the front opening 11. The front cover 15 is attached to the lamp body 13 by fitting an edge 15a of the front cover 15 to an edge 13a around the front opening 11. A lamp unit 19 is disposed inside a lamp chamber 17 defined by the lamp body 13 and the front cover 15. It is noted that the vehicle headlamp 100 is shown and described as having a circular shape. However, the shape of the vehicle headlamp is not limited to the circular shape, and may be any shape as long as it fits the vehicle body.

The lamp unit 19 is a headlamp unit configured to form a driving beam light distribution pattern. As shown in Fig. 2, the angle of the lamp unit 19 is adjustable by an aiming mechanism 21 to adjust an optical axis Ax of light to be irradiated therefrom. The optical axis Ax of the lamp unit 19 is adjusted to extend substantially along a front-and-rear direction of a vehicle.

The lamp unit 19 includes a headlamp light source 23 and a headlamp reflector 25. While the headlamp light source 23 is a halogen bulb in this embodiment, a discharge bulb or a semiconductor light emitting device, such as an LED, may also be used as the headlamp light source 23.

The lamp unit 19 is a parabolic-type lamp unit. That is, the headlamp reflector 25 has a base reflecting surface 25a which is formed as a paraboloidal surface having the optical axis Ax as a center axis of the paraboloidal surface, and the headlamp light source 23 is disposed at or near a focal point F1 of the paraboloidal surface. The base reflecting surface 25a reflects light L1 from the headlamp light source 23 toward the front of the vehicle in substantially parallel rays to form the driving beam light distribution pattern.

An attaching opening 27 is formed in a bottom portion of the headlamp reflector 25 around the optical axis Ax, and the headlamp light source 23 is fixedly inserted in the attaching opening 27.

A daytime running lamp light source 31 is disposed on a rear side of the headlamp reflector 25. While the daytime running lamp light source 31 is an LED in this embodiment, other semiconductor light emitting devices or a filament bulb may also be used as the daytime running lamp light source 31. However, by using a semiconductor light emitting device such as the LED as the daytime running lamp light source 31, a space occupied by the daytime running lamp light source 31 is not as large as in a case where a discharge bulb or a halogen bulb is used. Thus, the lamp unit 19 can be downsized. In addition, when using the semiconductor light emitting device, an effect of heat generated from the daytime running lamp light source 31 is diminished. Thus, the concern that a deposited surface of the reflector that the daytime running lamp light source 31 may melt is decreased.

The daytime running lamp light source 31 is fixed on a first daytime running lamp reflector 33A which is fixed to the headlamp reflector 25. The first daytime running lamp reflector 33A has a substantially ellipsoidal reflecting surface 33Aa on upper and rear sides of the daytime running lamp light source 31, and light L2 from the daytime running lamp light source 31 is forwardly reflected by the reflecting surface 33Aa.

A through hole 35 is formed in a portion of the headlamp reflector 25 in front of the first daytime running lamp reflector 33A, and the through hole 35 allows the light reflected by the daytime running lamp reflector 33A as well as direct light from the daytime running lamp light source 31 to forwardly travel therethrough. The through hole 35 is arranged below a horizontal center line CL of the headlamp reflector 25 at a middle portion in the horizontal direction.

A second daytime running lamp reflector 33B is provided on the reflecting surface 25a of the headlamp reflector 25 near the through hole 35. The headlamp reflector 25 and the second daytime running lamp reflector 33B are formed in a one-piece structure such that the second daytime running lamp reflector 33B is fixed to the headlamp reflector 25.

A substantially ellipsoidal reflecting surface 33Ba of the second daytime running lamp reflector 33B reflects the light reflected by the first daytime running lamp reflector 33A and the direct light from the daytime running lamp light source 31 toward the reflecting surface 25a of the headlamp reflector 25. In order to allow the light reflected by the second daytime running lamp reflector 33B, a gap is provided between the headlamp reflector 25 and the second daytime running lamp reflector 33B.

The ellipsoidal reflecting surface 33Aa of the first daytime running lamp reflector 33A has a first focal point FA1 and a second focal point FA2. The ellipsoidal reflecting surface 33Ba of the second daytime running lamp reflector 33B has a first focal point FB1 and a second focal point FB2. The daytime running lamp light source 31 is disposed at the first focal point FA1 of the first daytime running lamp reflector 33A. The second focal point FA2 of the first daytime running lamp reflector 33A is positioned at the first focal point FB1 of the second daytime running lamp reflector 33B, and the headlamp light source 23 is positioned near the second focal point FB2 of the second daytime running lamp reflector 33B.

According to the vehicle headlamp 100 having the configuration described above, the light L2 from the daytime running lamp light source 31 is reflected by the ellipsoidal reflecting surface 33Aa of the first daytime running lamp reflector 33A to pass through the second focal point FA2 of the ellipsoidal reflecting surface 33Aa, i.e. through the first focal point FB1 of the second daytime running lamp reflector 33B, and is subsequently reflected by the ellipsoidal reflecting surface 33Ba of the second daytime running lamp reflector 33B.

The light L2 reflected by the ellipsoidal reflecting surface 33Ba of the second daytime running lamp reflector 33B passes through the second focal point FB2 of the ellipsoidal reflecting surface 33Ba, i.e. through the focal point F1 of the headlamp reflector 25 at or near which the headlamp light source 23 is disposed, and is finally reflected by the headlamp reflector 25 to form a light distribution pattern for daytime running.

Because the second focal point FB2 is positioned near the headlamp light source 23, a central area around an intersecting point of horizontal and vertical lines of the headlamp 100 is illuminated with sufficient light having a luminous intensity of about 460 1m without being blacked out.

More specifically, the second focal point FB2 is positioned slightly on a rear side of the headlamp light source 23, whereby a slightly upward oriented light distribution pattern, which is suitable for daytime running, is formed.

The light L2 emitted from the daytime running lamp light source 31 and reflected by the first daytime running lamp reflector 33A is entirely reflected by the second daytime running lamp reflector 33B to pass near the focal point F1 of the headlamp reflector 25, and is subsequently reflected by the headlamp reflector 25 to form the daytime running light distribution pattern. Accordingly, the light L2 from the daytime running lamp light source 31 can use the reflecting surface 25a of the headlamp reflector 25 as effectively as possible.

Because the first daytime running lamp reflector 33A is fixedly provided on the headlamp reflector 25, the daytime running lamp light source 31 can be fixed with respect to the lamp body 13 via the headlamp reflector 25. Therefore, a special fixing member for the daytime running lamp light source 31 is not used so that the entire lamp unit 19 can be downsized. In addition, the driving beam light distribution pattern and the daytime running light distribution pattern can be adjusted at the same time using the aiming mechanism 21. The daytime running light distribution pattern can also be adjusted by the configuration of the second daytime running lamp reflector 33A.

As described above the vehicle headlamp 100 is configured such that the daytime running lamp light source 31 is disposed on the rear side of the headlamp reflector 25, and the first daytime running lamp reflector 33A which forwardly reflects the light L2 from the daytime running lamp light source 31 and the second daytime running lamp reflector 33B which reflects the light L2 from the first daytime running lamp reflector 33A toward the headlamp reflector 25 are integrally provided on the headlamp reflector 25. Therefore, it is possible to reduce a space for installing the daytime running lamp in the vehicle.

In addition, the daytime running light distribution pattern can be formed by reflecting the light L2 from the daytime running lamp light source 31 on the headlamp reflector 25. Because the reflecting surface 25a of the headlamp reflector 25 is effectively used in forming the daytime running light distribution pattern, it is possible to achieve a size of a base reflecting surface of a daytime running lamp in a range of about 25 cm² to about 200 cm² without increasing the overall size of the vehicle headlamp 100. That is, the first and second daytime running lamp reflectors 33A, 33B inside the vehicle headlamp 110 can be made small due to the effective use of the headlamp reflector 25, whereby the entire vehicle headlamp 100 can be downsized. Further, because the daytime running lamp light source 31 and the first and second daytime running lamp reflectors 33A, 33B are incorporated in the headlamp 100, there is no need to provide a space for separately installing a daytime running lamp. Accordingly, manufacturing cost of the lamp and the vehicle can be reduced.

Furthermore, because the daytime running lamp light source 31 is arranged on the rear side of the headlamp reflector 25, the affect of heat from the headlamp light source 23 on the daytime running lamp light source 31 is decreased.

Consequently, the vehicle headlamp 100 can form both the headlamp light distribution pattern and the daytime running light distribution pattern with lower cost while reducing a mounting space on the vehicle.

SECOND EMBODIMENT

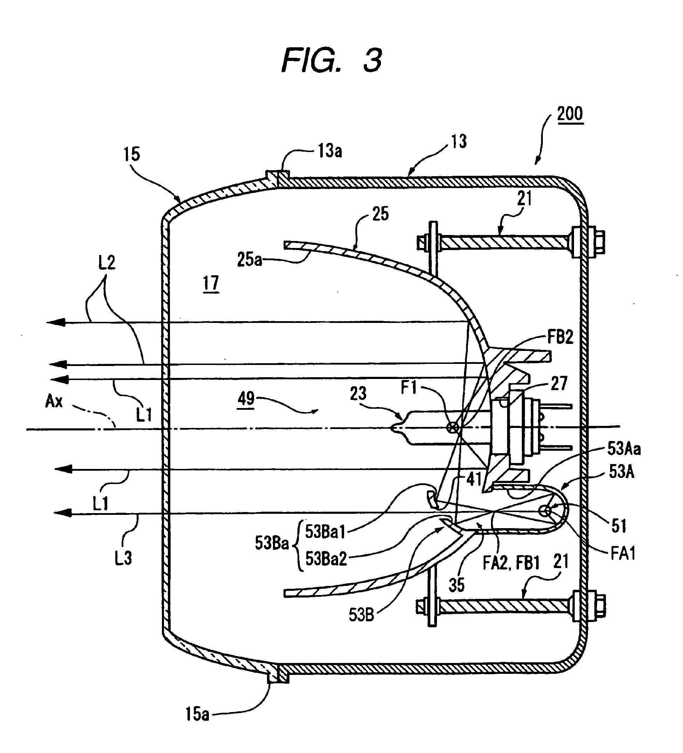

Fig. 3 is a sectional view of a vehicle headlamp 200 according to a second embodiment of the present invention. Components of the vehicle headlamp 200 that are similar to those of the vehicle headlamp 100 in the first embodiment will be indicated by same reference numerals, and repetitive description thereof will be omitted.

As shown in Fig. 3, a lamp unit 49 of the vehicle headlamp 200 includes a headlamp light source 23 disposed on an optical axis Ax extending in a front-and-rear direction of a vehicle, a headlamp reflector 25 which forwardly reflects light L1 from the headlamp light source 23, a daytime running lamp light source 51 disposed on a rear side of the headlamp reflector 25, a first daytime running lamp reflector 53A which forwardly reflects light L2 from the daytime running lamp light source 51, and a second daytime running lamp reflector 53B which reflects the light L2 from the first daytime running lamp reflector 53A toward the headlamp reflector 25.

The daytime running lamp light source 51 of the second embodiment is a filament bulb. However, as in the first embodiment, the daytime running lamp light source 51 may alternatively be another type of light source, such as, for example, an LED or other semiconductor light emitting device.

A substantially ellipsoidal reflecting surface 53Aa of the first daytime running lamp reflector 53A has a first focal pint FA1 and a second focal point FA2. A substantially ellipsoidal reflecting surface 53Ba of the second daytime running lamp reflector 53B has a first focal pint FB1 and a second focal point FB2. The daytime running lamp light source 51 is disposed at the first focal point FA1 of the first daytime running lamp reflector 53A. The second focal point FA2 of the first daylight running lamp reflector 53A is disposed at the first focal point FB1 of the second daytime running lamp reflector 53B, and the second focal point FB2 of the second daytime running lamp reflector 53B is positioned near the headlamp light source 23.

The ellipsoidal reflecting surface 53Ba of the second daytime running lamp reflector 53B has a plurality of reflecting surface sections 53Ba1, 53Ba2 which are spaced in a vertical direction by a slit 41 which extends in a horizontal direction.

According to this vehicle headlamp 200, a daytime running light distribution pattern is formed by the light L2 and light L3 that are emitted from the daytime running lamp light source 51, namely, the light L2 reflected by the second daytime running lamp reflector 53B and the headlamp reflector 25, and the light L3 reflected by the first daytime running lamp reflector 53A to pass through the slit 41 or directly emanated from the daytime running lamp light source 51 toward the slit 41.

Because the light L3 reflected by the first daytime running lamp reflector 53A or directly emanated from the daytime running lamp light source 51 is forwardly irradiated through the slit 41 without being reflected by the second daytime running lamp reflector 53B and the headlamp reflector 25, a portion of the daylight running lamp light distribution pattern can be formed with the light L3 which has little or no decrease in optical efficiency that is caused by reflection.

In addition, although the filament bulb is used as the daytime running lamp light source 51, heat from the light source can be radiated through the slit 41 in order to decrease the buildup of heat on the inner side the second daytime running lamp reflector 53B.

While description has been made in connection with embodiments of the present invention, those skilled in the art will understand that various changes and modification may be made therein without departing from the present invention

For example, while the lamp units 19, 49 of the embodiments described above are configured to form a driving beam light distribution pattern (also called an upper beam light distribution pattern) as a headlamp light distribution pattern, they may be configured to form a passing beam light distribution pattern (also called a lower beam light distribution pattern). Further, the headlamp light source 23 and the daytime running lamp light sources 31, 51 may be selected from various kinds of light sources including a discharge bulb, a halogen bulb and a semiconductor light emitting device such as an LED.

Furthermore, the first and second daytime running lamp reflectors 33A (53A), 33B (53B) and the headlamp reflector 25 may be formed in a one-piece structure or may be partially or totally provided as separate components.

## Claims

1. A vehicle headlamp (100, 200) comprising:
a headlamp light source (23) disposed on an optical axis (Ax) extending in a front-and-rear direction of a vehicle;
a headlamp reflector (25) which forwardly reflects light (L1) from the headlamp light source (23); **characterized by**
a daytime running lamp light source (31, 51) disposed to a rear side of the headlamp reflector (25);
a first daytime running lamp reflector (33A, 53A) which forwardly reflects light (L2, L3) from the daytime running lamp light source (31, 51); and
a second daytime running lamp reflector (33B, 53B) which reflects the light (L2) from the first daytime running lamp reflector (33A, 53A) toward the headlamp reflector (25),
wherein the light (L2) from the daytime running lamp light source (31, 51) is reflected by the first and second daytime running lamp reflectors (33A, 53A, 33B, 53B) and the headlamp reflector (25) to form a daytime running light distribution pattern.

2. The vehicle headlamp (100, 200) according to claim 1, wherein each of the first and second daytime running lamp reflectors (33A, 53A; 33B, 53B) comprises a substantially ellipsoidal reflecting surface (33Aa, 53Aa; 33Ba, 53Ba),
the daytime running lamp light source (31, 51) is disposed at a first focal point (FA1) of the substantially ellipsoidal reflecting surface (33Aa, 53Aa) of the first daytime running lamp reflector (33A, 53A),
a second focal point (FA2) of the substantially ellipsoidal reflecting surface (33Aa, 53Aa) of the first daytime running lamp reflector (33A, 53A) is disposed at a first focal point (FB1) of the substantially ellipsoidal reflecting surface (33Ba, 53Ba) of the second daytime running lamp reflector (33B, 53B), and
a second focal point (FB2) of the substantially ellipsoidal reflecting surface (33Ba, 53Ba) of the second daytime running lamp reflector (33B, 53B) is positioned between the headlamp reflector (25) and a focal point (F1) of the headlamp reflector (25).

3. The vehicle headlamp (100, 200) according to claim 2, wherein the second focal point (FB2) of the substantially ellipsoidal reflecting surface of the second daytime running lamp reflector is positioned to a rear side of the focal point (F1) of the headlamp reflector (25).

4. The vehicle headlamp (100, 200) according to any one of the preceding claims, further comprising an aiming mechanism (21) with which orientations of the headlamp light source (23), the headlamp reflector (25), the daytime running lamp light source (31, 51), the first daytime running lamp reflector (33A, 53A) and the second daytime running lamp reflector (33B, 53B) are simultaneously adjustable.

5. The vehicle headlamp (100, 200) according to any one of the preceding claims, further comprising:
a lamp body (13) comprising a front opening (11); and
a front cover (15) attached to the lamp body (13) to cover the front opening (11),
wherein the headlamp light source (23), the headlamp reflector (25), the daytime running lamp light source (31, 51), the first daytime running lamp reflector (33A, 53A) and the second daytime running lamp reflector (33B, 53B) are accommodated inside a lamp chamber (17) defined by the lamp body (13) and the lamp cover (15).

6. The vehicle headlamp (100, 200) according to any one of the preceding claims, wherein the headlamp reflector (25) comprises a through hole (35) formed in a portion of the headlamp reflector (25), the through hole (35) allowing the light (L2, L3) from the daytime running lamp light source (31, 51) to forwardly travel therethrough.

7. The vehicle headlamp (100, 200) according to claim 6, wherein the second daytime running lamp reflector (33B, 53B) is disposed in front of the through hole (35).

8. The vehicle headlamp (200) according to any one of the preceding claims, wherein the second daytime running lamp reflector (53B) comprises a slit (41) which allows a portion (L3) of the light (L2, L3) from the daytime running lamp light source (51) to forwardly travel therethrough.

## Patentansprüche

1. Fahrzeugscheinwerfer (100, 200), der umfasst:
eine Scheinwerfer-Lichtquelle (23), die auf einer optischen Achse (Ax) angeordnet ist, die in einer Längsrichtung eines Fahrzeugs verläuft;
einen Scheinwerfer-Reflektor (25), der Licht (L1) von der Scheinwerfer-Lichtquelle (23) nach vorn reflektiert; **gekennzeichnet durch**
eine Tagfahrleuchten-Lichtquelle (31, 51), die an einer Rückseite des Scheinwerfer-Reflektors (25) angeordnet ist;
einen ersten Tagfahrleuchten-Reflektor (33A, 53A), der Licht (L2, L3) von der Tagfahrleuchten-Lichtquelle (31, 51) nach vorn reflektiert; und
einen zweiten Tagfahrleuchten-Reflektor (33B, 53B), der das Licht (L2) von dem ersten Tagfahrleuchten-Reflektor (33A, 54A) auf den Scheinwerfer-Reflektor (25) zu reflektiert,
wobei das Licht (L2) von der Tagfahrleuchten-Lichtquelle (31, 51) **durch** den ersten und den zweiten Tragfahrleuchten-Reflektor (33A, 53A, 53B) sowie den Scheinwerfer-Reflektor (25) reflektiert wird, um ein Tagfahr-Lichtverteilungsmuster zu erzeugen.

2. Fahrzeugscheinwerfer (100, 200) nach Anspruch 1, wobei der erste und der zweite Tagfahrleuchten-Reflektor (33A, 53A; 33B, 53B) jeweils eine im Wesentlichen ellipsenförmige reflektierende Fläche (33A, 53Aa; 33Ba, 53Ba) umfassen,
die Tagfahrleuchten-Lichtquelle (31, 51) an einem ersten Brennpunkt (FA1) der im Wesentlichen ellipsenförmigen reflektierenden Fläche (33Aa, 53Aa) des ersten Tagfahrleuchten-Reflektors (33A, 53A) angeordnet ist,
ein zweiter Brennpunkt (FA2) der im Wesentlichen ellipsenförmigen reflektierenden Fläche (33Aa, 53Aa) des ersten Tagfahrleuchten-Reflektors (33A, 53A) an einem ersten Brennpunkt (FB1) der im Wesentlichen ellipsenförmigen reflektierenden Fläche (33Ba, 53Ba) des zweiten Tagfahrleuchten-Reflektors (33B, 53B) angeordnet ist, und
ein zweiter Brennpunkt (FB2) der im Wesentlichen ellipsenförmigen reflektierenden Fläche (33Ba, 53Ba) des zweiten Tagfahrleuchten-Reflektors (33B, 53B) zwischen dem Scheinwerfer-Refkeltor (25) und einem Brennpunkt (F1) des Scheinwerfer-Reflektors (25) positioniert ist.

3. Fahrzeugscheinwerfer (100, 200) nach Anspruch 2, wobei der zweite Brennpunkt (FB2) der im Wesentlichen ellipsenförmigen reflektierenden Fläche des zweiten Tagfahrleuchten-Reflektors an einer Rückseite des Brennpunktes (F1) des Scheinwerfer-Reflektors (25) positioniert ist.

4. Fahrzeugscheinwerfer (100, 200) nach einem der vorhergehenden Ansprüche, der des Weiteren einen Einstellmechanismus (21) umfasst, mit dem Ausrichtungen der Scheinwerfer-Lichtquelle (23), des Scheinwerfer-Reflektors (25), der Tagfahrleuchten-Lichtquelle (31, 51), des ersten Tagfahrleuchten-Reflektors (33A, 53A) sowie des zweiten Tragfahrleuchten-Reflektors (33B, 53B) simultan eingestellt werden können.

5. Fahrzeugscheinwerfer (100, 200) nach einem der vorangehenden Ansprüche, der des Weiteren umfasst:
einen Leuchtenkörper (13), der eine vordere Öffnung (11) umfasst; und
eine vordere Abdeckung (15), die an dem Leuchtenkörper (13) angebracht ist, um die vordere Öffnung (11) abzudecken,
wobei die Scheinwerfer-Lichtquelle (23), der Scheinwerfer-Reflektor (25), die Tagfahrleuchten-Lichtquelle (31, 51), der erste Tagfahrleuchten-Reflektor (33A, 53A) und der zweite Tagfahrleuchten-Reflektor (33B, 53B) im Inneren einer Leuchtenkammer (17) aufgenommen sind, die durch den Leuchtenkörper (13) und die Leuchtenabdeckung (15) gebildet wird.

6. Fahrzeugscheinwerfer (100, 200) nach einem der vorangehenden Ansprüche, wobei der Scheinwerfer-Reflektor (25) ein Durchgangsloch (35) umfasst, das in einem Abschnitt des Scheinwerfer-Reflektors (25) ausgebildet ist, wobei das Durchgangsloch (35) das Licht (L2, L3) von der Tagfahrleuchten-Lichtquelle (31, 51) nach vorn hindurchgelangen lässt.

7. Fahrzeugscheinwerfer (100, 200) nach Anspruch 6, wobei der zweite Tagfahrleuchten-Reflektor (33B, 53B) vor dem Durchgangsloch (35) angeordnet ist.

8. Fahrzeugscheinwerfer (200) nach einem der vorangehenden Ansprüche, wobei der zweite Tagfahrleuchten-Reflektor (53B) einen Schlitz (41) umfasst, der einen Teil (L3) des Lichtes (L2, L3) von der Tagfahrleuchten-Lichtquelle (51) nach vorn hindurchgelangen lässt.

## Revendications

1. Phare de véhicule (100, 200) comprenant :
une source lumineuse de phare (23) disposée sur un axe optique (Ax) s'étendant dans une direction avant et arrière d'un véhicule ;
un réflecteur de phare (25) qui reflète vers l'avant la lumière (L1) provenant de la source lumineuse de phare (23) ;
**caractérisé par** :
une source lumineuse de feu de circulation de jour (31, 51) disposée sur un côté arrière du réflecteur de phare (25) ;
un premier réflecteur de feu de circulation de jour (33A, 53A) qui reflète vers l'avant la lumière (L2, L3) provenant de la source lumineuse de feu de circulation de jour (31, 51) ; et
un deuxième réflecteur de feu de circulation de jour (33B, 53B) qui reflète la lumière (L2) provenant du premier réflecteur de feu de circulation de jour (33A, 53A) vers le réflecteur de phare (25),
dans lequel la lumière (L2) provenant de la source lumineuse de feu de circulation de jour (31, 51) est reflétée par les premier et deuxième réflecteurs de feu de circulation de jour (33A, 53A ; 33B, 53B) et le réflecteur de phare (25) afin de former un modèle de distribution de feu de circulation de jour.

2. Phare de véhicule (100, 200) selon la revendication 1, dans lequel chacun des premier et deuxième réflecteurs de feu de circulation de jour (33A, 53A ; 33B, 53B) comprend une surface réfléchissante sensiblement elliptique (33Aa, 53Aa ; 33Ba, 53Ba),
la source lumineuse de feu de circulation de jour (31, 51) est disposée au niveau d'un premier point focal (FA1) de la surface réfléchissante sensiblement elliptique (33Aa, 53Aa) du premier réflecteur de feu de circulation de jour (33A, 53A),
un deuxième point focal (FA2) de la surface réfléchissante sensiblement elliptique (33Aa, 53Aa) du premier réflecteur de feu de circulation de jour (33A, 53A) est disposé au niveau d'un premier point focal (FB1) de la surface réfléchissante sensiblement elliptique (33Ba, 53Ba) du deuxième réflecteur de feu de circulation de jour (33B, 53B), et
un deuxième point focal (FB2) de la surface réfléchissante sensiblement elliptique (33Ba, 53Ba) du deuxième réflecteur de feu de circulation de jour (33B, 53B) est positionné entre le réflecteur de phare (25) et un point focal (F1) du réflecteur de phare (25).

3. Phare de véhicule (100, 200) selon la revendication 2, dans lequel le deuxième point focal (FB2) de la surface réfléchissante sensiblement elliptique du deuxième réflecteur de feu de circulation de jour est positionné sur un côté arrière du point focal (F1) du réflecteur de phare (25).

4. Phare de véhicule (100, 200) selon l'une quelconque des revendications précédentes, comprenant en outre un mécanisme de visée (21) avec lequel les orientations de la source lumineuse de phare (23) du réflecteur de phare (25), de la source lumineuse de feu de circulation de jour (31, 51), le premier réflecteur de feu de circulation de jour (33A, 53A) et le deuxième réflecteur de feu de circulation de jour (33B, 53B) sont simultanément ajustables.

5. Phare de véhicule (100, 200) selon l'une quelconque des revendications précédentes, comprenant en outre :
un corps de lampe (13) comprenant une ouverture avant (11) ; et
un couvercle avant (15) fixé au corps de lampe (13) pour recouvrir l'ouverture avant (11),
dans lequel la source lumineuse de phare (23), le réflecteur de phare (25), la source lumineuse de feu de circulation de jour (31, 51), le premier réflecteur de feu de circulation de jour (33A, 53A) et le deuxième réflecteur de feu de circulation de jour (33B, 53B) sont logés à l'intérieur d'une chambre de lampe (17) définie par le corps de lampe (13) et le couvercle de lampe (15).

6. Phare de véhicule (100, 200) selon l'une quelconque des revendications précédentes, dans lequel le réflecteur de phare (25) comprend un trou de passage (35) formé dans une partie du réflecteur de phare (25), le trou de passage (35) permettant à la lumière (L2, L3) provenant de la source lumineuse de feu de circulation de jour (31, 51) de se déplacer vers l'avant à travers ce dernier.

7. Phare de véhicule (100, 200) selon la revendication 6, dans lequel le deuxième réflecteur de feu de circulation de jour (33B, 53B) est disposé en face du trou de passage (35).

8. Phare de véhicule (200) selon l'une quelconque des revendications précédentes, dans lequel le deuxième réflecteur de feu de circulation de jour (53B) comprend une fente (41) qui permet à une partie (L3) de la lumière (L2, L3) provenant de la source lumineuse de feu de circulation de jour (51) de se déplacer vers l'avant à travers cette dernière.
